# EUROPEAN PATENT SPECIFICATION

(11) **EP 4 407 014 B1**
(45) Date of publication and mention of the grant of the patent: **20.05.2026**
(21) Application number: 22872874.7
(22) Date of filing: 20.09.2022
(51) Int. Cl.: C10M 125/00, C10M 125/22, C10M 141/02, C10M 141/10, C10M 169/04, F16C 19/06, F16C 33/66, C10M 105/32, C10M 107/02, C10M 129/76, C10M 137/10, C10N 10/02, C10N 10/12, C10N 30/06, C10N 30/12, C10N 40/02, C10N 40/04, C10N 50/10, C10M 125/10, C10N 20/02, C10N 40/14

(54) **USE OF A LUBRICANT COMPOSITION AND ROLLING BEARING**
VERWENDUNG EINER SCHMIERMITTELZUSAMMENSETZUNG UND WÄLZLAGER
UTILISATION D'UNE COMPOSITION LUBRIFIANTE ET ROULEMENT

(30) Priority: 23.09.2021 JP 2021154974
(43) Date of publication of application: 31.07.2024
(73) Proprietor: NTN Corporation, Osaka-shi, Osaka 530-0005 (JP)
(72) Inventor: KAWAMURA, Takayuki, Kuwana-shi, Mie 511-0867 (JP)
(74) Representative: Henkel & Partner mbB
(86) International application number: PCT/JP2022/034924
(87) International publication number: WO 2023/048120

(56) References cited:
- CA-A1- 3 165 356
- CN-A- 104 212 555
- CN-A- 109 762 628
- JP-A- 2006 316 081
- JP-A- 2006 316 082
- JP-A- 2007 327 638
- JP-A- 2013 035 882
- JP-A- 2013 173 956
- US-A1- 2018 230 396
- V.K. GOUDA: "Corrosion inhibition of steel by sodium sulphite", vol. 13, 1973, pages 653 - 658, XP002812522, Retrieved from the Internet <URL:https://www.sciencedirect.com/science/article/pii/S0010938X73800368?via%3Dihub> [retrieved on 20241108], DOI: https://doi.org/10.1016/S0010-938X(73)80036-8
- VUKASOVICH M S ET AL: "Corrosion inhibition by sodium molybdate", JOURNAL OF THE LESS-COMMON METALS, ELSEVIER-SEQUOIA S.A. LAUSANNE, CH, vol. 54, no. 2, 1 August 1977 (1977-08-01), pages 437 - 448, XP024068854, ISSN: 0022-5088, [retrieved on 19770801], DOI: 10.1016/0022-5088(77)90066-2

## Description

### TECHNICAL FIELD

The present invention relates to a use of a lubricant composition for a gear and a bearing portion of a continuously variable transmission of an automobile, a speed-increasing gear of a wind power generator, and the like, and a rolling bearing using the lubricant composition.

### BACKGROUND ART

In general, bearings lubricated with a gear oil or a hydraulic operating oil are used for a hydraulic motor, a hydraulic pump, and an axle planetary unit. An operating oil is generally used as these oils.

In addition, in recent years, oil film breakage is likely to occur in connection with harsh use conditions such as high speed and high load and a reduced viscosity of a lubricating oil due to energy saving, and a bearing including a bearing member made of steel tends to be operated in a lubricating state in which steel portions are in contact with each other. As a result, surface damage (such as premature peeling) accompanied by wear may occur on a raceway surface of the bearing.

In the related art, as a countermeasure against wear of a bearing, a known extreme pressure agent or an oil agent is used to take a countermeasure against wear of a raceway surface of the bearing. For example, JP 2019-073572 A describes a lubricant composition that contains a predetermined amount of a phosphorus-based extreme pressure agent and is excellent in metal fatigue life, wear resistance, and electrical insulation properties even when the viscosity thereof is reduced.

JP 2007-327638 A discloses a grease-lubricated one-way clutch designed to have both sufficient wear resistance during freewheeling and a high, stable friction force during engagement. To achieve this, the lubricating grease contains 0.1 to 20 wt% of a fine-particle alkali metal molybdate salt, such as sodium molybdate, potassium molybdate, or lithium molybdate. Under extreme pressure conditions, the molybdate salt reacts with the sliding surfaces to form molybdenum oxide, which provides a wear-inhibiting effect without reducing the friction coefficient required for proper clutch engagement.

CA 3165356 A1 describes a grease composition for a grease-sealed bearing that prevents premature flaking caused by hydrogen embrittlement. The composition comprises a base oil, a thickener, and an additive combination of sodium molybdate and a zinc alkyldithiophosphate (ZnDTP) with a primary alkyl group. The grease contains 0.1-5 mass% of sodium molybdate and 0.1-5 mass% of the primary ZnDTP. This combination is said to provide a synergistic effect, preventing grease decomposition and subsequent hydrogen invasion into the steel material by forming protective oxide and coating films.

US 2018/0230396 A1 provides a grease composition for roller bearings intended to exhibit high-temperature durability, rust prevention, and resistance to premature flaking from hydrogen embrittlement. The composition includes a base oil (excluding ester-based synthetic oil), a thickener, and an additive package containing an alkanolamine (e.g., diethanolamine) and a quinoline-based antioxidant (2,2,4-trimethyl-1,2-dihydroquinoline). The grease composition explicitly excludes organic sulfonates. The combination of these specific additives is purported to achieve the desired properties by preventing grease decomposition and protecting the iron-based metal surfaces.

"Corrosion inhibition of steel by sodium sulphite" (Gouda et al. https://www.sciencedirect.com/science/article/pii/S0010938X738003 68?via%3Dihub vol. 13 1973, pages 653-658, XP002812522, DOI: https://doi.org/10.101650010-938X(73)80036-8) establishes that sodium sulphite provides corrosion inhibition for steel in a closed system at room temperature. The study indicates that sodium sulphite not only removes dissolved oxygen (O2) from the solution but also provides complete cathodic protection. It was found that sodium sulphite could tolerate the presence of aggressive ions such as chloride (Cl-), sulphate (SO42-), and sulphide (S2-). For mixtures containing sulphite with either sulphate or chloride, a concentration of 5 × 10⁻³M Na2SO3 was required to tolerate a wide concentration range of these aggressive ions.

"Corrosion inhibition by sodium molybdate" (Vukasovich et al. JOURNAL OF THE LESS-COMMON METALS, vol. 54, no. 2, 1 August 1977 (1977-08-01), pages 437-448, XP024068854, DOI: 10.1016/0022-5088(77)90066-2) describes a laboratory study on the corrosion inhibition of low-carbon steel by sodium molybdate in simulated cooling waters. The inhibiting efficacy of sodium molybdate is shown to be influenced by water composition, requiring higher concentrations in softer waters and in waters with high chloride and sulphate levels. Furthermore, it is disclosed that certain common water treatment chemicals, such as an alkyl phosphonate, sodium nitrite, zinc salt, and sodium gluconate, act synergistically to improve the inhibitive properties of molybdate.

### SUMMARY OF THE INVENTION

### PROBLEMS TO BE SOLVED BY THE INVENTION

In a case of the lubricant composition described in JP 2019-073572 A, even when the metal fatigue life and the wear resistance are good under normal use conditions, the lubricant composition may be insufficient as a countermeasure for corrosion wear under harsh conditions such as high speed and high load under high humidity. For example, to achieve energy saving in electrification of an automobile, a seal having a structure in which a seal torque is reduced may be adopted in a bearing to which a lubricating oil having a low viscosity is applied. In this case, water easily enters the internal space of the bearing, and adhesion, corrosion wear, and early peeling at a contact portion (such as a raceway surface) easily occur due to contact between steel portions caused by oil film breakage.

The present invention has been made in view of the above problem, and an object of the present invention is to provide a lubricant composition capable of suppressing wear and the like in a steel bearing portion under harsh conditions, and a rolling bearing using the lubricant composition.

### MEANS FOR SOLVING THE PROBLEM

The above object is solved by a use of a lubricant composition as defined in claim 1 and by a rolling bearing according to claim 7. The dependent claims are directed to different advantageous aspects of the invention.

A lubricant composition is used according to the present invention for a bearing portion made of steel, and the lubricant composition contains an inorganic sodium salt (NaxMyOz) , and a natural potential of the steel in an aqueous solution at 25°C in which the inorganic sodium salt is dissolved at a concentration of 1 mass% is 0.04 V or higher.

The inorganic sodium salt contains at least one selected from sodium molybdate (Na2MoO4) and sodium sulfite (Na2SO3).

The lubricant composition contains a sorbitan-based ester. The lubricant composition contains zinc alkyldithiophosphate.

The lubricant composition is a grease containing a thickener.

A rolling bearing of the present invention includes an inner ring, an outer ring, a plurality of rolling elements interposed between the inner ring and the outer ring, and a lubricant composition enclosed or supplied in a space inside the bearing, wherein the lubricant composition is the lubricant composition described above.

### EFFECT OF THE INVENTION

The lubricant composition is used according to the present invention for a bearing portion made of steel, and contains an inorganic sodium salt, and a natural potential of the steel in an aqueous solution at 25°C in which the inorganic sodium salt is dissolved at a concentration of 1 mass% is 0.04 V or higher, so that it is possible to form a coating film (corrosion-resistant coating film) unlikely to be corroded on the steel surface. With the effect of the coating film, it is possible to suppress adhesion and corrosion wear in the bearing portion made of steel even under harsh conditions, which makes wear resistance excellent. Thus, it is possible to suppress surface damage accompanied by wear on the raceway surface of the bearing.

The inorganic sodium salt contains at least one selected from sodium molybdate and sodium sulfite, and thus a thickness of the corrosion-resistant coating film formed on the steel surface is further increased, which makes the corrosion wear resistance and the adhesion suppression effect more excellent.

The lubricant composition contains a sorbitan-based ester or zinc alkyldithiophosphate, and thus, the lubricant composition is more excellent in corrosion wear resistance and adhesion suppressing effect.

The rolling bearing of the present invention uses the lubricant composition, and thus, adhesion and corrosion wear in the bearing portion made of steel can be suppressed even under harsh conditions such as high speed and high load under high humidity. Accordingly, the rolling bearing can be suitably used as a bearing used for a continuously variable transmission of an automobile, a speed-increasing gear of a wind power generator, and the like.

### BRIEF DESCRIPTION OF THE DRAWINGS

FIG. 1 is a longitudinal sectional view of a rolling bearing of the present invention.
FIG. 2 is a cross-sectional view of a speed-increasing gear.
FIG. 3 is a schematic diagram illustrating a method of measuring a natural potential.
FIG. 4 is a graph showing a result of natural potential measurement.
FIG. 5 is a schematic diagram illustrating a method of measuring a wear depth.

### MODE FOR CARRYING OUT THE INVENTION

The present inventors have conducted intensive studies on a lubricant composition to be used for lubrication to suppress wear and the like in a bearing portion made of steel under harsh conditions such as high speed and high load under high humidity. As a result, it has been found that when the lubricant composition contains an inorganic sodium salt (25°C, 1 mass% aqueous solution) with which the natural potential of steel is 0.04 V or higher, an unexpectedly excellent wear suppressing effect can be obtained. The present invention is based on such findings.

The lubricant composition is used for a bearing portion made of steel. The lubricant composition contains an inorganic sodium salt. The present invention is characterized in that the natural potential of steel in an aqueous solution at 25°C in which the inorganic sodium salt is dissolved at a concentration of 1 mass% is 0.04 V or higher.

Herein, the natural potential means a potential unique to a metal, which is maintained in an environment where the metal exists. Specifically, the natural potential refers to a potential difference at the time point when a reference electrode, a counter electrode, and a sample electrode are immersed in a sample solution having a predetermined concentration, and are left to stand for a certain period of time under a predetermined temperature condition, and the oxidation-reduction state on the surface of the sample electrode reaches equilibrium. As the sample electrode, a test piece having a free shape such as a plate shape or an annular shape can be used, and in the present invention, it is preferable to use an annular test piece.

The lubricant composition used in the present invention contains an inorganic sodium salt (25°C, 1 mass% aqueous solution) with which the natural potential of steel is 0.04 V or higher as described above, and thus, a coating film (corrosion-resistant coating film) which is unlikely to be corroded is formed on the steel surface. In general, it is considered that when a kind of the sample electrode and a concentration of the sample solution are the same, a thicker oxide film is formed on the surface of the sample electrode as the natural potential is higher. This corrosion-resistant coating film is an oxide film, and thus, it is considered that an oxide film thicker than that when the natural potential of steel is lower than 0.04 V is formed. With the effect of this coating film, a newly formed surface is less likely to appear in a case of slight wear, which makes the corrosion wear resistance and the adhesion suppressing effect excellent. As a result, the wear resistance is made excellent even in a severe lubrication state in which steel portions are usually in contact with each other.

As the inorganic sodium salt contained in the lubricant composition, the natural potential of steel in an aqueous solution at 25°C in which the inorganic sodium salt is dissolved at a concentration of 1 mass% is preferably 0.06 V or higher, more preferably 0.08 V or higher, and still more preferably 0.10 V or higher from the viewpoint of forming a thicker corrosion-resistant coating film to improve wear resistance. In addition, the inorganic sodium salt is preferably water-soluble. When the inorganic sodium salt is water-soluble, the inorganic sodium salt is dissolved in water that has entered the bearing space, so that a corrosion-resistant coating film is more easily formed.

The inorganic sodium salt that can be used in the present invention preferably contains at least one selected from sodium molybdate and sodium sulfite, and more preferably contains sodium molybdate.

The sodium molybdate used in the present invention can be used as either an anhydride or a hydrate. A blending amount of sodium molybdate is preferably 0.1 to 5 mass% with respect to the total amount of the lubricant composition. The blending amount is more preferably 0.1 to 2 mass%, and still more preferably 1 to 2 mass%. When the blending amount of sodium molybdate is less than 0.1 mass%, it is difficult to obtain sufficient wear resistance.

It is considered that sodium molybdate reacts with a frictional wearing surface or an iron-based metal fresh surface exposed by wear in the bearing portion to form a film containing a molybdenum compound together with iron oxide. The rolling surface of the bearing is covered with the iron oxide or molybdenum compound film, and the thickness of the corrosion-resistant film formed on the steel surface is increased, thereby making the corrosion wear resistance and the adhesion suppression effect more excellent.

The lubricant composition contains a sorbitan-based ester. Examples of the sorbitan-based ester include sorbitan fatty acid esters such as sorbitan laurate, sorbitan monooleate, sorbitan trioleate, sorbitan tribehenate, sorbitan stearate, sorbitan tristearate, and sorbitan caprylate, but are not limited thereto. The sorbitan-based ester is more preferably sorbitan monooleate or sorbitan trioleate from the viewpoint of dispersibility of the inorganic sodium salt.

It is considered that due to interaction between a particle surface of the inorganic sodium salt dispersed in the lubricant composition and the sorbitan-based ester, the sorbitan-based ester forms an adsorption film on the particle surface to stabilize the particle. Specifically, the sorbitan-based ester has a tetrahydrofuran structure (5-membered cyclic ether structure) having an appropriate coordination ability, and thus, the sorbitan-based ester is excellent in dispersibility of the inorganic sodium salt. It is considered that as a result, the finer inorganic sodium salt can be stably present in the lubricant composition for a long period of time without aggregation, and the corrosion-resistant coating film can be more effectively formed. In addition, the sorbitan-based ester adsorption film is also formed on the surface of the bearing rolling surface, and thus can contribute to improvement of wear resistance.

The blending proportion of the sorbitan-based ester in the lubricant composition used in the present invention is preferably 0.05 to 5 mass%. The blending proportion is more preferably 0.1 to 2 mass%, and may be 1 to 2 mass%. When the proportion is less than 0.05 mass%, the effect of dispersing the inorganic sodium salt and the effect of improving the wear resistance may be poor. When the proportion exceeds 5 mass%, the effect of dispersing the inorganic sodium salt and the effect of improving the wear resistance may reach a plateau.

In the present invention, a wet grinding method may be employed in production of the lubricant composition in which the inorganic sodium salt is dispersed. Examples of the method include a method in which an inorganic sodium salt or the like having no affinity for a liquid phase is pulverized in the presence of a sorbitan-based ester in a certain amount of a base oil serving as a liquid phase, and then the mixture is diluted with the base oil so as to give a predetermined concentration, and other additives are added as necessary. This allows the inorganic sodium salt such as molybdate to be easily wrapped in the sorbitan-based ester, so that dispersibility is improved, and aggregation and precipitation are less likely to occur.

The lubricant composition contains zinc alkyldithiophosphate. When a coating film is formed with zinc alkyldithiophosphate, the corrosion-resistant coating film is protected, which makes the corrosion wear resistance and the adhesion suppression effect further excellent. The coating film is a reaction film with the oxide film or the molybdenum compound described above.

The zinc alkyldithiophosphate is zinc alkyldithiophosphate having a primary alkyl group having 1 to 30 carbon atoms (hereinafter, referred to as pri-ZnDTP). In the present invention, pri-ZnDTP is represented by the following formula (1).

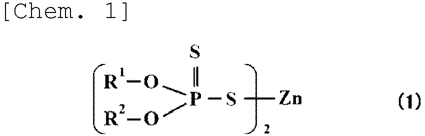

In the formula (1), R¹ and R² each represent a primary alkyl group having 1 to 30 carbon atoms. The primary alkyl group means that, in the substituents R¹ and R², a carbon atom directly bonded to an oxygen atom in zinc dialkyldithiophosphate is a primary carbon atom. Examples of R¹ and R² include a methyl group, an ethyl group, a propyl group, a butyl group, an isobutyl group, a pentyl group, an isopentyl group, a hexyl group, an isohexyl group, a 2-ethylhexyl group, a heptyl group, an octyl group, a nonyl group, a decyl group, a dodecyl group, a tetradecyl group, a hexadecyl group, an octadecyl group, an eicosyl group, a docosyl group, and a tetracosyl group. Note that R¹ and R² may be the same as or different from each other. In the formula (1), the substituents R¹ and R² preferably have 6 to 24 carbon atoms, more preferably 8 to 16 carbon atoms.

In the present invention, when zinc alkyldithiophosphate is used, wear on the rolling surface can be effectively prevented by a synergistic effect with the inorganic sodium salt, particularly sodium molybdate. This effect is made excellent by using pri-ZnDTP. Note that as the pri-ZnDTP represented by the above formula (1), one kind may be used, or two or more kinds may be used in combination.

A blending amount of the zinc alkyldithiophosphate is preferably 0.1 to 5 mass% with respect to the total amount of the lubricant composition. The blending amount is more preferably 0.1 to 2 mass%, and still more preferably 1 to 2 mass%. When the blending amount of zinc alkyldithiophosphate is less than 0.1 mass%, it is difficult to obtain improvement in corrosion wear resistance and adhesion suppression effect.

As the base oil used in the lubricant composition used in the present invention, any base oil can be used without particular limitation as long as it is usually used in a rolling bearing. Examples thereof include mineral oils such as a paraffin-based mineral oil and a naphthene-based mineral oil, synthetic hydrocarbon oils such as a poly-α-olefin oil (PAO oil) and an alkylbenzene oil, an ester oil, an ether oil, a silicone oil, and a fluorine oil. These base oils may be used singly or in combination of two or more kinds thereof.

The synthetic hydrocarbon oil is more preferably PAO oil. The PAO oil is a mixture of an oligomer or a polymer of an α-olefin or an isomerized α-olefin. Specific examples of the α-olefin include 1-octene, 1-nonene, 1-decene, 1-dodecene, 1-tridecene, 1-tetradecene, 1-pentadecene, 1-hexadecene, 1-heptadecene, 1-octadecene, 1-nonadecene, 1-eicosene, 1-docosene, and 1-tetradocosene, and usually, a mixture thereof is used. Examples of the ester oil include polyol ester oil, phosphate ester oil, polymer ester oil, aromatic ester oil, carbonate ester oil, diester oil, and polyglycol oil.

A kinematic viscosity (in a case of a mixed oil, a kinematic viscosity of the mixed oil) of the base oil is preferably 10 to 150 mm²/s at 40°C. It is more preferably 10 to 100 mm²/s, still more preferably 20 to 80 mm²/s, and most preferably 20 to 40 mm²/s.

The lubricant composition used in the present invention may further contain other additives as long as the object of the present invention is not impaired. Examples thereof include antioxidants such as amine-based, phenol-based, and sulfur-based compounds, rust inhibitors such as sulfonates, and oil agents such as esters and alcohols.

Examples of the form of the lubricant composition used in the present invention include (1) a lubricating oil composition containing a base oil and an inorganic sodium salt, and (2) a grease composition containing a base oil, a thickener, and an inorganic sodium salt.

When the lubricant composition used in the present invention is a lubricating oil composition, a component other than the inorganic sodium salt and other additives is the base oil. In that case, the base oil is preferably contained in an amount of 90 mass% or more and may be 95 mass% or more with respect to the total amount of the lubricating oil composition. When the lubricant compositionused in the present invention is a grease composition, the base oil preferably is contained in an amount of 60 mass% to 95 mass% with respect to the total amount of the base oil and the thickener. When the content of the base oil is less than 60 mass%, the life may be reduced, and when the content of the base oil is more than 95 mass%, the amount of the thickener is relatively small, so that greasing may be difficult.

The thickener to be blended when the lubricant composition of the present invention is used as a grease composition is not particularly limited, and general thickeners usually used in the field of grease can be used. For example, a soap-based thickener such as a metal soap or a composite metal soap, and a non-soap-based thickener such as benton, silica gel, a urea compound, or a urea urethane compound can be used. Examples of the metal soap include sodium soap, calcium soap, aluminum soap, and lithium soap, and examples of the urea compound and the urea urethane compound include a diurea compound, a triurea compound, a tetraurea compound, another polyurea compound, and a diurethane compound.

The urea compound is obtained by reacting a polyisocyanate component and a monoamine component. Examples of the polyisocyanate component include phenylene diisocyanate, tolylene diisocyanate, diphenyl diisocyanate, diphenylmethane diisocyanate, octadecane diisocyanate, decane diisocyanate, and hexane diisocyanate. As the monoamine component, an aliphatic monoamine, an alicyclic monoamine, or an aromatic monoamine can be used. Examples of the aliphatic monoamine include hexylamine, octylamine, dodecylamine, hexadecylamine, octadecylamine, stearylamine, and oleylamine. Examples of the alicyclic monoamine include cyclohexylamine. Examples of the aromatic monoamine include aniline and p-toluidine.

When the lubricant composition used in the present invention is used as a grease composition, worked penetration (JIS K 2220) is preferably in a range of 200 to 350. When the worked penetration is less than 200, oil separation is small, and lubrication failure may occur. On the other hand, when the worked penetration exceeds 350, the grease composition is soft and easily flows out of the bearing, which is not preferable. The worked penetration is more preferably in a range of 250 to 300.

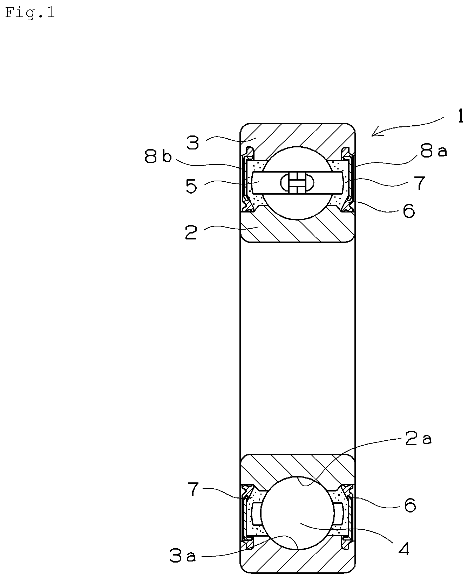

A rolling bearing in which the lubricant composition is enclosed will be described with reference to FIG. 1. FIG. 1 is a cross-sectional view of a deep groove ball bearing. In a rolling bearing 1, an inner ring 2 having an inner ring rolling surface 2a on an outer peripheral surface thereof and an outer ring 3 having an outer ring rolling surface 3a on an inner peripheral surface thereof are concentrically disposed, and a plurality of rolling elements 4 are disposed between the inner ring rolling surface 2a and the outer ring rolling surface 3a. The rolling elements 4 are held by a retainer 5. Further, both axial end openings 8a and 8b of the inner and outer rings are sealed by a sealing member 6, and the above-described lubricant composition 7 is enclosed at least around the rolling elements 4 in the space inside the bearing. The inner ring 2, the outer ring 3, and the rolling elements 4 are made of a steel material, and the lubricant composition 7 is interposed between rolling surfaces of the inner ring 2 and the outer ring 3, and the rolling elements 4, so that the bearing is lubricated.

In the rolling bearing 1, the steel material constituting the bearing members such as the inner ring 2, the outer ring 3, and the rolling elements 4 is any material generally used as a bearing material, and examples thereof include high-carbon chromium bearing steel (SUJ1, SUJ2, SUJ3, SUJ4, SUJ5, and the like, JIS G 4805), carburized steel (SCr420, SCM420, and the like, JIS G 4053), and stainless steel (SUS440C and the like, JIS G 4303), high speed steel (M50 and the like), and cold rolled steel. The sealing member 6 may be made of metal or a rubber molded body alone, or may be a composite of a rubber molded body and a metal plate, a plastic plate, or a ceramic plate. A composite of a rubber molded body and a metal plate is preferable from the viewpoint of durability and ease of fixing.

Although the ball bearing (including the sealing member) is illustrated as the bearing in FIG. 1, the form of the rolling bearing of the present invention is not limited thereto. For example, the bearing can also be used as a cylindrical roller bearing, a tapered roller bearing, a self-aligning roller bearing, a needle roller bearing, a thrust cylindrical roller bearing, a thrust tapered roller bearing, a thrust needle roller bearing, a thrust self-aligning roller bearing, or the like.

In the rolling bearing of the present invention, the lubricant composition is supplied and enclosed in the space inside the bearing (bearing portion), and thus adhesion and corrosion wear in the bearing portion made of steel can be suppressed even under harsh conditions such as high speed and high load under high humidity, which makes wear resistance excellent. Accordingly, the rolling bearing can be suitably used as a bearing used for a continuously variable transmission of an automobile, a speed-increasing gear of a wind power generator, and the like.

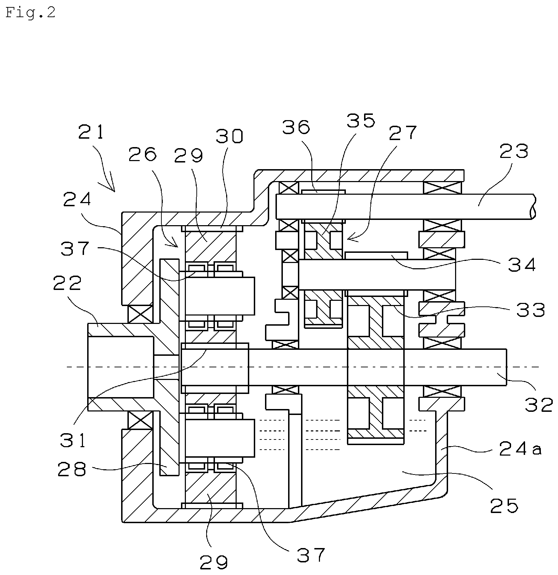

FIG. 2 illustrates an example of a speed-increasing gear of a wind power generator to which the rolling bearing of the present invention is applied. FIG. 2 is a cross-sectional view of a speed-increasing gear. In a speed-increasing gear main body 21, a planetary gear mechanism 26 serving as a primary speed-increasing gear and a secondary speed-increasing gear 27 are provided between an input shaft 22 and an output shaft 23. In the planetary gear mechanism 26, a planetary gear 29 is mounted on a carrier 28 integrated with the input shaft 22, the planetary gear 29 is meshed with an internally toothed ring gear 30 and a sun gear 31, and a shaft integrated with the sun gear 31 is an intermediate output shaft 32. The secondary speed-increasing gear 27 includes a gear train that transmits rotation of the intermediate output shaft 32 to the output shaft 23 via a plurality of gears 33 to 36. The planetary gear 29, a rolling bearing 37 made of bearing steel supporting the planetary gear 29, the ring gear 30, and the respective components serving as the gear 33 of the secondary speed-increasing gear 27 are immersed in a lubricating oil 25 in a lubricating oil reservoir 24a in a housing 24. The lubricating oil 25 is the lubricant composition described above. The lubricating oil reservoir 24a is circulated by a circulating oil supply means (not illustrated) including a pump and a pipe. Note that the circulating oil supply means is not necessarily provided, and may be an oil bath lubrication type.

The speed-increasing gear in the wind power generator is installed outdoors, and there is a possibility that moisture is mixed into the lubricating oil due to fluctuations in humidity or exposure to wind and rain. In the lubricant composition of the present invention, even under such lubricating conditions, adhesion and corrosion wear in the bearing portion made of steel can be suppressed, so that the life of the speed-increasing gear can be extended. As a result, the frequency of maintenance of the wind power generator can be reduced.

The present invention can also be used as a method for evaluating a lubricant composition. Specifically, the evaluation method is an evaluation method for evaluating wear resistance of a lubricant composition to be used in a bearing portion made of steel, and the evaluation method includes measuring a natural potential of steel in an aqueous solution at 25°C in which an inorganic sodium salt contained in the lubricant composition is dissolved at a concentration of 1 mass%, and evaluating the wear resistance of the lubricant composition based on the natural potential obtained by the measurement. Here, evaluating the wear resistance means that superiority or inferiority of the wear resistance of the lubricant composition is determined. The magnitude of the natural potential affects wear resistance in a sliding test in the presence of the lubricant composition as shown in Examples described below. Specifically, a lubricant composition containing an inorganic sodium salt having a natural potential of 0.04 V or higher tends to be excellent in wear resistance. In the evaluation method of the present invention, for example, the wear resistance can be evaluated by the magnitude of the natural potential of the inorganic sodium salt among lubricant compositions having the same composition except for the inorganic sodium salt. For example, a lubricant composition containing an inorganic sodium salt having a natural potential of 0.04 V or higher can be evaluated to be superior in wear resistance to a lubricant composition containing an inorganic sodium salt having a natural potential of lower than 0.04 V (for example, 0.02 V or lower).

### [Examples]

To evaluate the corrosion-resistant film-forming ability and wear resistance of the inorganic sodium salt, natural potential measurement of various inorganic sodium salts and a wear depth test of lubricant compositions containing them were performed.

### <Natural potential>

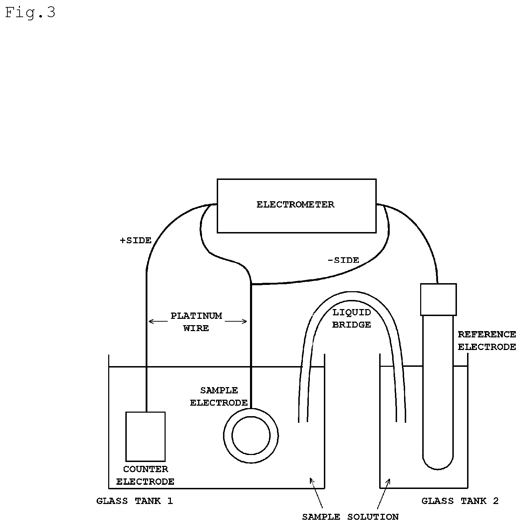

As an example of the natural potential measurement, measurement results of three test solutions of a sodium molybdate aqueous solution (0.5 mass%, 1 mass%) and a sodium tungstate aqueous solution (1 mass%) will be described. For each sample solution, a natural potential was measured under the following measurement conditions using an apparatus illustrated in FIG. 3. The sample solution was subjected to nitrogen bubbling for 40 hours before measurement to remove dissolved oxygen. At the time of measurement, bubbling was stopped, and a potential difference was measured for about 40 hours. The potential difference after 30 hours from start of the measurement was adopted as the value of the natural potential.

### Measurement conditions

Apparatus: Potentiostat manufactured by HOKUTO DENKO CORPORATION
Reference electrode: saturated calomel electrode (SCE)
Counter electrode: platinum electrode
Sample electrode: test piece made of SUJ2 (annular shape)
Measurement temperature: 25°C

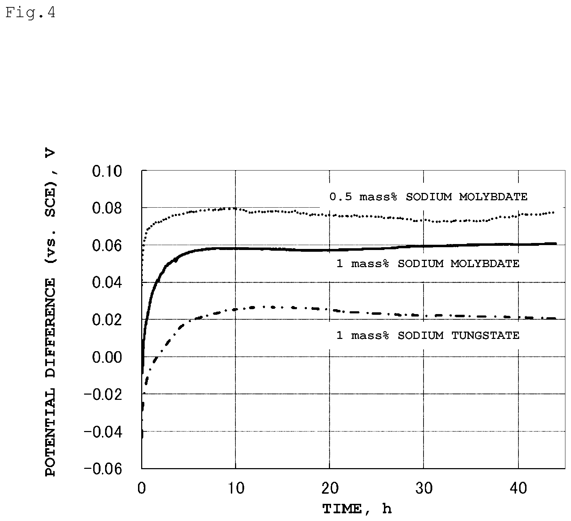

FIG. 4 shows a result of natural potential measurement. It is found that for all the three sample solutions, the potential difference greatly increases at the beginning of the measurement, and shows a substantially constant value after 10 hours from the start of the measurement. When the solution concentration was 1 mass%, the natural potential of sodium molybdate was 0.05 to 0.06 V, whereas the natural potential of sodium tungstate was 0.02 to 0.03 V, and sodium molybdate showed a relatively high natural potential value. This result suggests that sodium molybdate forms an oxide film thicker than that of sodium tungstate. The natural potential of 0.5 mass% sodium molybdate was 0.07 to 0.09 V.

### <Wear resistance (wear depth)>

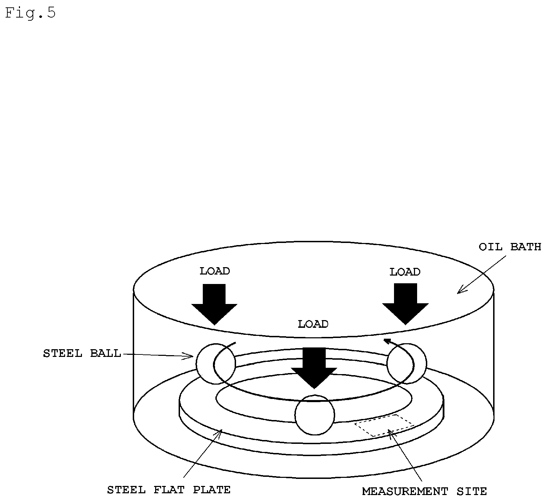

The wear depth test was performed under the following test conditions using a testing apparatus illustrated in FIG. 5. An annular steel flat plate and three steel balls were immersed in a hot water bath of various lubricant compositions, and the steel balls were rotated for a predetermined time along the annular ring while applying a load in a steel flat plate direction. The wear depth was measured by measuring the depth of a slight recess formed on the rolling surface of the steel flat plate after the steel ball was rotated for a predetermined time. In FIG. 5, a region surrounded by a dotted line is a measurement site.

### Test conditions

Test piece: steel ball/steel flat plate
Material of steel material: SUJ2
Pₘₐₓ: 3.0GPa
Rotation (sliding) speed: 300 mm/s
Time: 20 hours
Oil temperature: 100°C

Table 1 shows results of composition, natural potential, and wear depth of lubricant compositions containing various inorganic sodium salts. The natural potential described in Table 1 is the natural potential of steel in an aqueous solution at 25°C in which the inorganic sodium salt contained in each composition is dissolved at a concentration of 1 mass%. Regarding the preparation of the lubricant composition, contents of the base oil, the additive, and the inorganic sodium salt indicate content ratios (mass%) with respect to the lubricant composition (base oil + additive + inorganic sodium salt), respectively. Note that the lubricant compositions of Example 1 to 8 contain, as the inorganic sodium salt, an inorganic sodium salt with which the natural potential of steel in an aqueous solution at 25°C dissolved at a concentration of 1 mass% is 0.04 V or higher. Example 7 is according to the present invention, examples 1-6, 8 are not according to the present invention.

**[Table 1]**

| | | Examples | | | | | | | | Comparative Examples | | | | | | | |
|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 |
| Composi tion (mass%) Base oil | | | | | | | | | | | | | | | | | |
| | Ester oil¹⁾ | 9 8 . 5 | 9 8 | 9 8 | 9 9 | - | 9 8 | 9 7 | 9 8 | 9 9 | 9 9 | 9 9 | 9 9 | 9 9 | 9 9 | 9 8 | 9 8 |
| | PAO oil²⁾ | - | - | - | - | 9 8 | - | - | - | - | - | - | - | - | - | - | - |
| Additiv es | | | | | | | | | | | | | | | | | |
| | Zinc dithio phosph ate³⁾ | - | - | - | - | - | 1 | 1 | - | - | - | - | - | - | - | 1 | - |
| | Sorbit an-based ester⁴⁾ | - | - | 1 | - | - | - | - | - | - | - | - | - | - | - | - | - |
| | Sorbit an-based ester⁵⁾ | 1 | 1 | - | - | 1 | - | 1 | 1 | - | - | - | - | - | - | - | 1 |
| Inorgan ic sodium salt | | | | | | | | | | | | | | | | | |
| | Sodium acetat e | - | - | - | - | - | - | - | - | 1 | - | - | - | - | - | - | - |
| | Sodium silica te | - | - | - | - | - | - | - | - | - | 1 | - | - | - | - | 1 | 1 |
| | Sodium chroma te | - | - | - | - | - | - | - | - | - | - | 1 | - | - | - | - | - |
| | Sodium carbon ate | - | - | - | - | - | - | - | - | - | - | - | 1 | - | - | - | - |
| | Sodium sulfit e | - | - | - | - | - | - | - | 1 | - | - | - | - | - | - | - | - |
| | Sodium phosph ate | - | - | - | - | - | - | - | - | - | - | - | - | 1 | - | - | - |
| | Sodium tungst ate | - | - | - | - | - | - | - | - | - | - | - | - | - | 1 | - | - |
| | Sodium molybd ate | 0 . 5 | 1 | 1 | 1 | 1 | 1 | 1 | - | - | - | - | - | - | - | - | - |
| Natural potenti al Potenti al differe nce, V | | 0 . 0 6 | 0 . 0 6 | 0 . 0 6 | 0 . 0 6 | 0 . 0 6 | 0 . 0 6 | 0 . 0 6 | 0 . 0 4 | 0 . 0 1 | 0 . 0 1 | 0 . 0 2 | 0 . 0 1 | 0 . 0 2 | 0 . 0 2 | 0 . 0 1 | 0 . 0 1 |
| Wear resista nce Wear depth, µm | | 1 | 1 | 2 | 3 | 0 . 5 | 0 . 7 | 0 . 3 | 3 | 9 | 1 1 | 1 2 | 9 | 1 1 | 8 | 1 0 | 1 0 |

| | | | | | | | | | | | | | | | | | |
|---|---|---|---|---|---|---|---|---|---|---|---|---|---|---|---|---|---|
| 1) Unistar H-310D manufactured by NOF Corporation, kinematic viscosity at 40°C: 33 mm²/s 2) SpectraSyn 6 manufactured by Exxon Mobil Corporation, kinematic viscosity at 40°C: 31 mm²/s 3) Lubrizol 1360 manufactured by Lubrizol Corporation 4) Sorbitan monooleate 5) Sorbitan trioleate | | | | | | | | | | | | | | | | | |

In Table 1, it can be seen that the wear depth of each of Examples 1 to 8 is 3 µm or less, whereas the wear depth of each of Comparative Examples 1 to 8 is 8 µm or more, and the lubricant composition containing an inorganic sodium salt having a natural potential of 0.04 V or higher is excellent in wear resistance. The higher the natural potential is, the more difficult the steel surface is to be subjected to oxidation (corrosion), and thus, it is considered that in Examples 1 to 8, an oxide film thicker than that in Comparative Examples 1 to 8 is formed, and the steel surface is protected from wear, particularly corrosion wear.

It has been found that Example 2 had a smaller wear depth than that of Example 8, and sodium molybdate having a higher natural potential than that of sodium sulfite had an excellent wear resistance improving effect. In addition, it has been found that the wear depth was smaller in Example 3 and Example 2 than in Example 4, and the combined use of the sorbitan-based ester and sodium molybdate was excellent in the effect of improving the wear resistance. Furthermore, the wear depth decreased in the order of Example 3 > Example 2 > Example 6, and thus it was found that the effect of improving the wear resistance was large in the order of sorbitan monooleate < sorbitan trioleate < zinc dithiophosphate in a case of the same blending amount.

The wear depth of Example 7 according to the present invention was smaller than those of Example 2 and Example 6, and thus it has been found that the combined use of the sorbitan-based ester, zinc dithiophosphate, and sodium molybdate is particularly excellent in the effect of improving the wear resistance. It is considered that this is due to a synergistic effect of the effect of forming an adsorption film on the surface of sodium molybdate particles by the sorbitan-based ester and the effect of protecting (reinforcing) the corrosion-resistant coating film of sodium molybdate by the reaction film of zinc dithiophosphate. In addition, the wear depth of Example 5 was smaller than that of Example 2, and thus it has been found that the PAO oil was more excellent in the effect of improving the wear resistance than the ester oil. Note that in Example 1 in which the blending amount of sodium molybdate was relatively small, the natural potential was higher than that in Example 2, but the wear depth was the same value.

### INDUSTRIAL APPLICABILITY

The lubricant composition used in the present invention can suppress wear and the like in a bearing portion made of steel under harsh conditions such as high speed and high load under high humidity, and is excellent in wear resistance. Accordingly, the lubricant composition is used for a bearing used for a continuously variable transmission of an automobile, a speed-increasing gear of a wind power generator, and the like.

### REFERENCE SIGNS LIST

- 1: Rolling bearing
- 2: Inner ring
- 3: Outer ring
- 4: Rolling element
- 5: Retainer
- 6: Sealing member
- 7: Lubricant composition
- 8a, 8b: Both axial end openings
- 21: Speed-increasing gear main body
- 22: Input shaft
- 23: Output shaft
- 24: Housing
- 25: Lubricating oil
- 26: Planetary gear mechanism
- 27: Secondary speed-increasing gear
- 28: Carrier
- 29: Planetary gear
- 30: Ring gear
- 31: Sun gear
- 32: Intermediate output shaft
- 33 to 36: Gear
- 37: Rolling bearing

## Claims

1. Use of a lubricant composition (7) in a bearing portion made of steel,
the lubricant composition comprising an inorganic sodium salt, a sorbitan-based ester and zinc dialkyldithiophosphate having a primary alkyl group having 1 to 30 carbon atoms, wherein
the natural potential of the steel in an aqueous solution at 25°C in which the inorganic sodium salt is dissolved at a concentration of 1 mass% is 0.04 V or higher.

2. The use according to claim 1, wherein the inorganic sodium salt contains at least one selected from sodium molybdate and sodium sulfite.

3. The use according to any of claims 1 or 2, wherein the lubricant is a grease containing a thickener.

4. The use according to any of claims 1 to 3, wherein the lubricant oil composition contains an ester oil or a poly-α-olefin oil as a base oil, and wherein
the inorganic sodium salt is sodium molybdate, and the content of the sodium molybdate is 0.1 to 2 mass% with respect to a total amount of the lubricant composition.

5. The use according to claim 4, wherein the sorbitan-based ester is sorbitan trioleate.

6. The use according to claim 4 or 5, wherein the base oil has a kinematic viscosity at 40°C of 20 to 40 mm 2 /s.

7. A rolling bearing (1) comprising an inner ring (2), an outer ring (3), a plurality of rolling elements (4) interposed between the inner ring (2) and the outer ring (3), and a lubricant composition (7) enclosed or supplied in a space inside the bearing, wherein the lubricant composition comprises an inorganic sodium salt, a sorbitan-based ester and zinc dialkyldithiophosphate having a primary alkyl group having 1 to 30 carbon atoms, and wherein
a portion of the rolling bearing is made of steel, the natural potential of the steel in an aqueous solution at 25°C in which the inorganic sodium salt is dissolved at a concentration of 1 mass% is 0.04 V or higher

## Patentansprüche

1. Verwendung einer Schmiermittelzusammensetzung (7) in einem Lagerabschnitt aus Stahl, wobei
die Schmiermittelzusammensetzung ein anorganisches Natriumsalz, einen Ester auf Sorbitanbasis und Zinkdialkyldithiophosphat mit einer primären Alkylgruppe mit 1 bis 30 Kohlenstoffatomen umfasst,
wobei das natürliche Potential des Stahls in einer wässrigen Lösung bei 25°C, in der das anorganische Natriumsalz in einer Konzentration von 1 Massen-% gelöst ist, 0,04 V oder höher ist.

2. Die Verwendung nach Anspruch 1, wobei das anorganische Natriumsalz mindestens eines ausgewählt aus Natriummolybdat und Natriumsulfit enthält.

3. Die Verwendung nach einem der Ansprüche 1 oder 2, wobei das Schmiermittel ein Fett ist, das ein Verdickungsmittel enthält.

4. Die Verwendung nach einem der Ansprüche 1 bis 3, wobei die Schmierölzusammensetzung ein Esteröl oder ein Poly-α-Olefinöl als Grundöl enthält, und wobei das anorganische Natriumsalz Natriummolybdat ist und der Gehalt an Natriummolybdat 0,1 bis 2 Massen-% in Bezug auf die Gesamtmenge der Schmiermittelzusammensetzung beträgt.

5. Die Verwendung nach Anspruch 4, wobei der Ester auf Sorbitanbasis Sorbitantrioleat ist.

6. Die Verwendung nach Anspruch 4 oder 5, wobei das Grundöl eine kinematische Viskosität bei 40°C von 20 bis 40 mm²/s aufweist.

7. Ein Wälzlager (1), umfassend einen Innenring (2), einen Außenring (3), eine Mehrzahl von Wälzkörpern (4), die zwischen dem Innenring (2) und dem Außenring (3) angeordnet sind, und eine Schmiermittelzusammensetzung (7), die in einem Raum innerhalb des Lagers eingeschlossen oder zugeführt ist, wobei die Schmiermittelzusammensetzung ein anorganisches Natriumsalz, einen Ester auf Sorbitanbasis und Zinkdialkyldithiophosphat mit einer primären Alkylgruppe mit 1 bis 30 Kohlenstoffatomen umfasst, und
wobei ein Abschnitt des Wälzlagers aus Stahl gefertigt ist, das natürliche Potential des Stahls in einer wässrigen Lösung bei 25°C, in der das anorganische Natriumsalz in einer Konzentration von 1 Massen-% gelöst ist, 0,04 V oder höher ist.

## Revendications

1. Utilisation d'une composition lubrifiante (7) dans une partie de palier en acier,
la composition lubrifiante comprenant un sel de sodium inorganique, un ester à base de sorbitan et du dialkyldithiophosphate de zinc ayant un groupe alkyle primaire comportant de 1 à 30 atomes de carbone,
dans laquelle le potentiel naturel de l'acier dans une solution aqueuse à 25 °C dans laquelle le sel de sodium inorganique est dissous à une concentration de 1 % en masse est de 0,04 V ou plus.

2. L'utilisation selon la revendication 1, dans laquelle le sel de sodium inorganique contient au moins un élément choisi parmi le molybdate de sodium et le sulfite de sodium.

3. L'utilisation selon l'une quelconque des revendications 1 ou 2, dans laquelle le lubrifiant est une graisse contenant un épaississant.

4. L'utilisation selon l'une quelconque des revendications 1 à 3, dans laquelle la composition d'huile lubrifiante contient une huile d'ester ou une huile de poly-α-oléfine en tant qu'huile de base, et dans laquelle le sel de sodium inorganique est le molybdate de sodium, et la teneur en molybdate de sodium est de 0,1 à 2 % en masse par rapport à la quantité totale de la composition lubrifiante.

5. L'utilisation selon la revendication 4, dans laquelle l'ester à base de sorbitan est le trioléate de sorbitan.

6. L'utilisation selon la revendication 4 ou 5, dans laquelle l'huile de base a une viscosité cinématique à 40 °C de 20 à 40 mm²/s.

7. Un palier à roulement (1) comprenant une bague intérieure (2), une bague extérieure (3), une pluralité d'éléments roulants (4) interposés entre la bague intérieure (2) et la bague extérieure (3), et une composition lubrifiante (7) enfermée ou fournie dans un espace à l'intérieur du palier, dans lequel la composition lubrifiante comprend un sel de sodium inorganique, un ester à base de sorbitan et du dialkyldithiophosphate de zinc ayant un groupe alkyle primaire comportant de 1 à 30 atomes de carbone, et
dans lequel une partie du palier à roulement est en acier, le potentiel naturel de l'acier dans une solution aqueuse à 25 °C dans laquelle le sel de sodium inorganique est dissous à une concentration de 1 % en masse est de 0,04 V ou plus.
